# EUROPÄISCHE PATENTSCHRIFT

(11) **EP 0 592 847 B1**
(45) Veröffentlichungstag und Bekanntmachung des Hinweises auf die Patenterteilung: **20.08.1997**
(21) Anmeldenummer: 93115299.5
(22) Anmeldetag: 23.09.1993
(51) Int. Cl.: F16B 11/00

(54) **Befestigung einer starren Platte an einer Befestigungsfläche**
Means of fastening a rigid plate to a fastening surface
Dispositif pour fixer une plaque rigide à une embase de fixation

(30) Priorität: 14.10.1992 DE 4234552; 14.10.1992 DE 9213834 U
(43) Veröffentlichungstag der Anmeldung: 20.04.1994
(73) Patentinhaber: Steinhilber, Helmut, CH-6052 Hergiswil (CH)
(72) Erfinder: Steinhilber, Helmut, CH-6052 Hergiswil (CH)
(74) Vertreter: Patentanwälte Westphal, Buchner, Mussgnug Neunert, Göhring

(56) Entgegenhaltungen:
- EP-A- 0 457 957

## Beschreibung

Die Erfindung betrifft eine Befestigung einer starren Platte an einer Befestigungsfläche gemäß dem Oberbegriff des Patentanspruchs 1.

Bei einer Vielzahl von unterschiedlichsten Anwendungsfällen ist es erforderlich, eine starre Platte an einer Befestigungsfläche anzubringen. Diese Befestigungsfläche kann eine Fläche einer Maschine, eines Gerätes, eines Möbelstückes, einer Gebäudewand oder dgl. sein. Die Platte kann insbesondere zur Anbringung von Haltevorrichtungen, Geräteteilen, Möbelelementen usw. dienen. Je nach Anwendungsfall muß die Befestigung der Platte an der Befestigungsfläche unterschiedlich hohe Belastungen aufnehmen können.

Bei Befestigungsflächen, die ausreichend glatt sind, wie z.B. bei Befestigungsflächen aus Metall, Glas, Kunststoff, geschliffenem Stein oder Holz usw. haben sich als Befestigung flächige Klebeverbindungen bewährt. Wird eine starre Platte flächig auf die Befestigungsfläche geklebt, so weist die Klebeverbindung in der Regel eine sehr hohe Bindefestigkeit gegen ein Abheben senkrecht von der Befestigungsfläche auf. Wirkt auf die Platte eine Kippbelastung, so wird eine Kante der Platte mit hoher Kraft von der Befestigungsfläche weggezogen, während die gegenüberliegende Kante der Platte sich als Kippkante an der Befestigungsfläche abstützt. Insbesondere bei hohen Langzeit-Kippbelastungen kann dies zu einem allmählichen Ablösen der Klebeverbindung führen, das an der der Kippkante entgegengesetzten Kante der Platte beginnt. Die Langzeitfestigkeit der Klebeverbindung bei solchen Kippbelastungen hängt wesentlich von den Kriecheigenschaften des Klebstoffes ab. Dabei neigen solche Klebstoffe zu einem stärkeren Kriechen, die die Befestigungsfläche nicht angreifen und sich erforderlichenfalls von der Befestigungsfläche wieder restlos entfernen lassen.

Ein Anwendungsfall dieser Befestigungstechnik ist die Befestigung von Aufbauten auf einer horizontalen Möbelplatte. Solche Aufbauten sind, insbesondere wenn sie eine gewisse Höhe aufweisen, häufig beträchtlichen Kippbelastungen ausgesetzt. Beispielsweise ist es aus EP 0 457 957 A1, Ausführungsbeispiel der Figur 8, bekannt, am unteren Ende einer Stützsäule eine horizontale Platte anzubringen, die flach auf die Oberfläche einer Tischplatte aufgesetzt und an dieser mittels eines textilen Haftverschlusses befestigt wird. Dadurch ist ein Nachrüsten beliebiger Schreib- und Arbeitstische mittels einer vertikalen Stützsäule möglich. Die vertikale Stützsäule eignet sich zur Aufnahme unterschiedlicher Funktionselemente, beispielsweise der Platte eines Stehpults, eines Bildschirmträgers, eines Telefonarmes oder dergleichen.

Die Befestigung der Platte auf der Oberfläche der Möbelplatte hat gegenüber herkömmlichen Klemmvorrichtungen den Vorteil, daß die Befestigung von der Form der Möbelplatte und des Möbels unabhängig ist. Insbesondere kann diese Art der Befestigung bei jeder Stärke der Möbelplatte, bei jeder Kantenform der Möbelplatte und auch bei nicht über den Möbelkorpus überragenden Möbelplatten verwendet werden. Da die Platte nicht über den Rand der Möbelplatte hinausragt, behindert die Befestigung der Stützsäule nicht das fugenlose Anschließen des Möbels an ein anderes Möbel oder an eine Raumwand. Die Platte mit der Stützsäule kann von der Oberfläche der Möbelplatte wieder entfernt werden, ohne daß die Möbelplatte beschädigt wird. Hierzu wird zunächst die starre Platte im Bereich des Haftverschlusses abgetrennt. Dann kann der auf die Möbelplatte aufgeklebte Teil des Haftverschlusses von der Möbelplatte abgetrennt werden. Da dieser Teil flexibel ist, kann er behutsam von der Oberfläche der Möbelplatte abgelöst werden, ohne diese zu beschädigen. Dies wäre bei einem unmittelbaren Aufkleben der starren Platte auf die Oberfläche der Möbelplatte schwierig. Diese bekannte Befestigung der Stützsäule mittels einer auf der Möbelplatte, insbesondere einer Tischplatte, aufliegenden und mit dieser durch einen textilen Haftverschluß verbundenen Platte hat sich hervorragend bewährt.

Wird durch die Stützsäule eine Kippbelastung auf die Platte ausgeübt, so wird auch hier die eine Kante der Platte mit hoher Kraft von der Möbelplatte weggezogen, während die gegenüberliegende Kante der Platte sich als Kippkante an der Möbelplatte abstützt. Insbesondere bei hohen Langzeit-Kippbelastungen kann dies zu einer allmählichen Lockerung des Haftverschlusses führen, die an der der Kippkante entgegengesetzten Kante der Platte beginnt.

Der Erfindung liegt die Aufgabe zugrunde, eine Befestigung einer starren Platte an einer Befestigungsfläche mittels einer flächigen Klebeverbindung zu schaffen, die eine hohe Belastbarkeit, insbesondere auch bei Kippbelastungen, aufweist.

Diese Aufgabe wird erfindungsgemäß gelöst durch eine Befestigung mit den Merkmalen des Anspruchs 1.

Vorteilhafte Ausführungen der Erfindung sind in den Unteransprüchen angegeben.

Die Erfindung beruht auf der Idee, die starre Platte nicht unmittelbar auf die Befestigungsfläche zu kleben, sondern für die Klebeverbindung eine Scheibe vorzusehen, mit der die Platte so verbunden ist, daß ein auf die Platte wirkendes Kippmoment in eine auf die Scheibe wirkende Abhebekraft umgewandelt wird. Wirkt auf die Platte eine Kippbelastung, so stützt sich die Platte mit einer Kippkante an der Befestigungsfläche ab und erzeugt eine an der Scheibe angreifende, senkrecht von der Befestigungsfläche weggerichtete Zugkraft. Gegen eine solche senkrecht zur Fläche der Klebeverbindung gerichtete Abhebekraft weist die Klebeverbindung eine hohe Bindefestigkeit auf. Auch bei Verwendung eines wieder ablösbaren Klebstoffes mit entsprechenden Kriecheigenschaften ergibt sich damit eine hohe Belastbarkeit der Befestigung insbesondere auch bei Langzeitbelastung.

Falls die Platte Kippbelastungen in allen Kipprichtungen aufnehmen soll, ist die Verbindung der Scheibe mit der Platte im Flächenschwerpunkt der Scheibe angeordnet, so daß die Platte gegenüber der Scheibe mit zwei Freiheitsgraden in jeder Richtung verkippt werden kann. Es gibt jedoch auch Fälle, in denen die befestigte Platte einer Belastung nur in einer definierten Kipprichtung ausgesetzt ist. Dies ist beispielsweise dann der Fall, wenn die Platte an einer vertikalen Wand befestigt ist und nur durch die Schwerkraft eines an der Platte angebrachten oder aufgehängten Gegenstandes belastet wird. In diesen Fällen kann die Scheibe längs einer zur Ebene der Kippbewegung senkrechten Spiegelsymmetrieachse mit der Platte verbunden sein. Nur ein Kippmoment mit einem Freiheitsgrad um diese Spiegelsymmetrieachse kann in der erfindungsgemäßen Weise aufgenommen werden. Eine in der Spiegelsymmetrieachse auf die Scheibe einwirkende Zugbelastung bewirkt auch hier nur eine Abhebekraft senkrecht zur Fläche der Klebeverbindung.

Ist eine dauerhafte Befestigung der Platte an der Befestigungsfläche beabsichtigt, so kann die Scheibe unmittelbar an der Befestigungsfläche angeklebt werden. In häufigen Anwendungsfällen soll jedoch die Befestigung der Platte an der Befestigungsfläche erforderlichenfalls wieder gelöst werden können. In diesen Fällen ist es vorteilhaft, wenn die Verbindung zwischen Platte und Scheibe lösbar ist. Soll die Platte von der Befestigungsfläche entfernt werden, so kann zunächst die starre Platte von der Scheibe getrennt werden, damit die Scheibe zugänglich wird. Wenn die Scheibe frei zugänglich ist, kann die flächige Klebeverbindung zwischen der Scheibe und der Befestigungsfläche leichter gelöst werden, da nun nicht mehr ein ganzflächiges Abheben senkrecht von der Befestigungsfläche notwendig ist, sondern die Scheibe von ihrem Rand her abschälend getrennt werden kann. Gegen eine abschälende Beanspruchung ist die Bindefestigkeit der Klebeverbindung wesentlich geringer als gegen ein ganzflächiges Abheben.

Um die Klebeverbindung zwischen der Scheibe und der Befestigungsfläche abschälend trennen zu können, kann die Scheibe eine gewisse elastische Biegsamkeit aufweisen. Dadurch ist es möglich, die Scheibe vom Rand her von der Befestigungsfläche abzuheben und längs einer wandernden Trennlinie abzuschälen.

In einer vorteilhaften Ausführung wird das Ablösen weiter durch eine flexible Klebstoffträgerfolie erleichtert, die mit einer klebfähigen Seite an der Befestigungsfläche anliegt und mit einer nicht klebenden Seite lösbar an der Scheibe fixiert wird. Die Scheibe kann in dieser Ausführung völlig starr ausgebildet sein, wodurch zuverlässig gewährleistet ist, daß die Scheibe nur über ihre gesamte Klebeverbindungsfläche gleichzeitig von der Befestigungsfläche abgehoben werden kann. Nach dem Trennen der starren Scheibe von der Klebstoffträgerfolie kann diese wegen ihrer Flexibilität relativ leicht von der Befestigungsfläche abgezogen werden, auch wenn ein gut haftender Klebstoff verwendet wird.

Zur lösbaren Fixierung der Klebstoffträgerfolie an der Scheibe kann vorzugsweise eine formschlüssige Verbindung von Scheibe und Klebstoffträgerfolie dienen. Es ist auch möglich, die Klebstoffträgerfolie mittels eines Klettverschlusses (selbstverhakender Haftverschluß) an der Scheibe zu fixieren.

Eine bevorzugte Anwendung der Erfindung ist die Befestigung von Aufbauelementen auf einer horizontalen Möbelfläche, z. B. auf einer Tischfläche. Solche Aufbauelemente können Stehpulte, Bildschirmträger, Telefonarme, Sichtschutzwände, Regalborde, Tischbeleuchtungen usw. sein. Erfindungsgemäß können vorhandene Arbeitstische nachträglich mit solchen Aufbauelementen ausgerüstet werden. Weiter ist es von Vorteil, daß die Aufbauelemente auch wieder entfernt oder geändert werden können, ohne daß die Möbelfläche beschädigt oder verunstaltet wird.

Im folgenden wird die Erfindung anhand von in der Zeichnung dargestellten Ausführungsbeispielen näher erläutert. Es zeigen :
- Figur 1: eine Ansicht der Platte von unten,
- Figur 2: einen Schnitt durch die Befestigung gemäß der Linie II-II in Figur 1,
- Figur 3: eine Draufsicht auf die Platte,
- Figur 4: einen Figur 2 entsprechenden Teilschnitt in vergrößerter Darstellung und
- Figur 5: eine Draufsicht auf die Platte in einer zweiten Ausführungsform,
- Figur 6: eine Figur 2 entsprechende Darstellung der Befestigung einer vertikalen Stützsäule auf einer Möbelfläche und
- Figur 7: eine Figur 3 entsprechende Draufsicht auf die Befestigung der Figur 6.

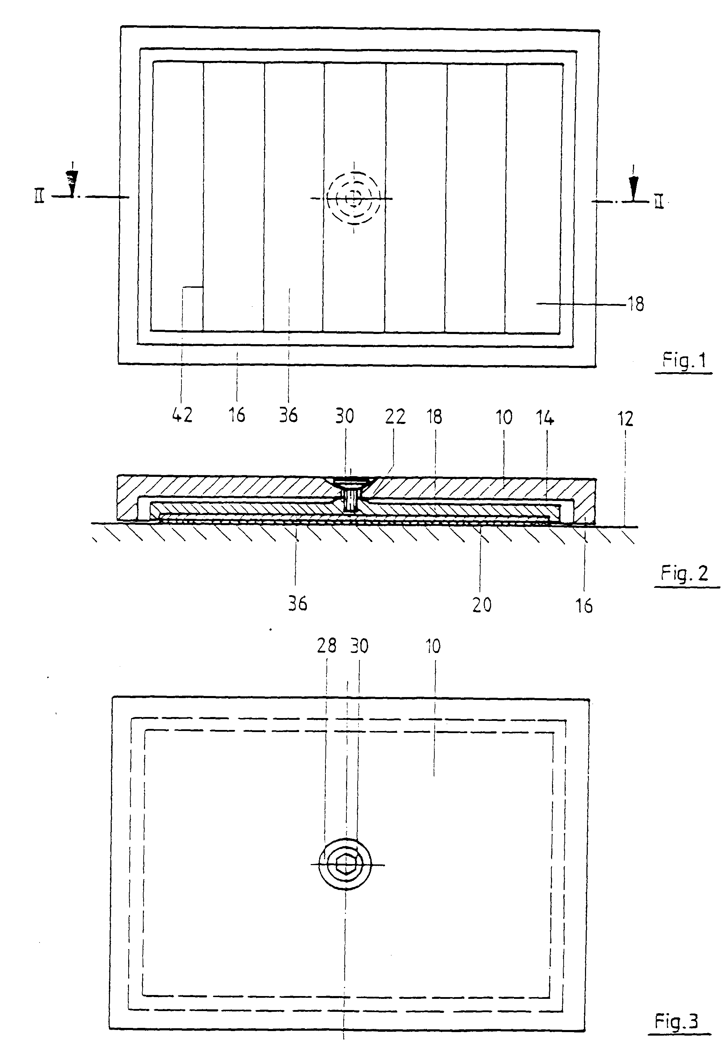

Im Ausführungsbeispiel der Figuren 1 bis 4 ist die Befestigung einer starren Platte 10 an einer ebenen Befestigungsfläche 12 dargestellt. Die starre Platte 10 hat beispielsweise eine rechteckige Form und kann eine Metallguß- oder Kunststoffplatte sein. Die Platte 10 dient insbesondere als Befestigungselement, um irgendwelche Teile an der Befestigungsfläche 12 anzubringen. Diese Teile, die an der Platte 10 angebracht sind, können beliebig ausgebildet sein und sind daher nicht dargestellt.

Die Platte 10 weist an ihrer der Befestigungsfläche 12 zugewandten Unterseite einen flachen Hohlraum 14 auf. Um eine möglichst großflächige Klebeverbindung zu erhalten, ist der Hohlraum 14 großflächig ausgebildet und läßt vorzugsweise nur einen umlaufenden Rand 16 der Unterseite der Platte 10 stehen. In den Hohlraum 14 ist eine Scheibe 18 eingesetzt, die den Hohlraum 14 flächenmäßig im wesentlichen ausfüllt, um eine großflächige Klebeverbindung zu ermöglichen. Die Unterseite der Scheibe 18 ist mittels einer flächigen Klebeverbindung 20 an der Befestigungsfläche 12 befestigt. Der Rand 16 der Platte 10 liegt auf der Befestigungsfläche 12 auf.

Im Flächenschwerpunkt der Scheibe 18, d.h. bei der dargestellten rechteckigen Form der Scheibe 18 im Schnittpunkt der Diagonalen, weist die Scheibe 18 an ihrer Oberseite eine Erhöhung 22 auf. Im Flächenschwerpunkt mittig in der Erhöhung 22 ist eine Gewindebohrung 24 in die Scheibe 18 eingebracht. Die Platte 10 weist axial fluchtend mit der Gewindebohrung 24 einen Durchbruch 26 auf. Der Durchbruch 26 ist von der Oberseite der Platte 10 her durch eine kugelkalottenförmige Einsenkung 28 erweitert. Eine Schraube 30 ist von oben in die Platte 10 eingesetzt, durchgreift den Durchbruch 26 und ist in die Gewindebohrung 24 eindrehbar. Die Schraube 30 weist einen Kopf auf, der an seiner schaftseitigen Unterseite kugelkalottenförmig abgerundet ist, so daß er in Verbindung mit der Einsenkung 28 ein Kugelgelenk bildet. Dieses Kugelgelenk von Schraube 30 und Einsenkung 28 ergibt eine pendelnde Lagerung zwischen Platte 10 und Scheibe 18, die ein geringes gegenseitiges Verkippen von Platte 10 und Scheibe 18 in jeder Richtung ermöglicht.

Die Scheibe 18 weist an ihrer der Befestigungsfläche 12 zugewandten Unterseite eine in Querrichtung über die ganze Breite der Scheibe 18 durchgehende Aussparung 32 auf. In dieser Aussparung 32 sind parallel zueinander über die ganze Breite durchlaufende rechtwinklig abgewinkelte Profilwinkel 34 an der Scheibe 18 ausgeformt. Die Scheibe 18 mit der Aussparung 32 und den Profilwinkeln 34 ist vorzugsweise ein Stranggußprofilteil aus Aluminium oder einem sonstigen Material, welches eine ausreichende Steifigkeit der Scheibe 18 gewährleistet.

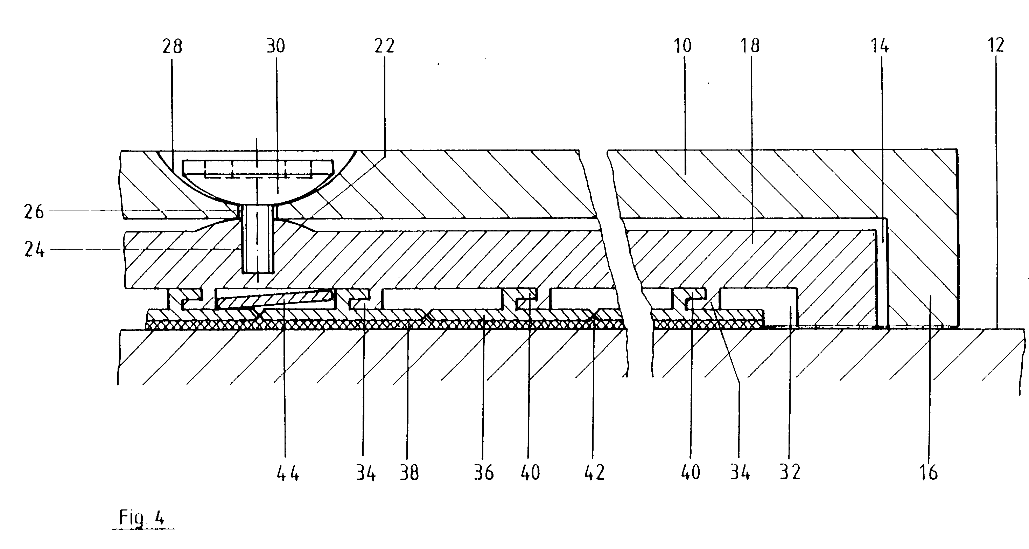

Die Klebeverbindung 20 wird durch eine Klebstoffträgerfolie 36 bewirkt. Die Klebstoffträgerfolie 36 ist eine extrudierte flexible Kunststoffolie, deren Abmessungen im wesentlichen den Abmessungen der Aussparung 32 entsprechen. Die Klebstoffträgerfolie 36 ist an ihrer Unterseite mit einem Klebstoff 38 beschichtet, der eine gute Bindefestigkeit mit der Befestigungsfläche 12 aufweist, jedoch ein rückstandsloses Ablösen von der Befestigungsfläche 12 ermöglicht. Die Klebstoffträgerfolie 36 weist an ihrer Oberseite Profilwinkel 40 auf, die in Anzahl, Abstand und Form den Profilwinkeln 34 der Scheibe 18 entsprechen. Die Profilwinkel 40 der Klebstoffträgerfolie 36 sind jedoch den Profilwinkeln 34 der Scheibe 18 entgegengesetzt gerichtet, so daß die Profilwinkel 34 und 40 ineinandergreifen können, wie dies in Figur 4 gezeigt ist, um die Klebstoffträgerfolie 36 und die Scheibe 18 gegen ein Abheben senkrecht zur Ebene der Befestigungsfläche 12 formschlüssig miteinander zu verbinden. Die Klebstoffträgerfolie 36 weist weiter zwischen den Profilwinkeln 40 ebenfalls über die gesamte Breite durchgehende Sollbruchlinien 42 mit verringerter Materialstärke auf.

In einer abgewandelten Ausführung können die Profilwinkel 34 der Scheibe 18 auch durch eine der Klebstoffträgerfolie 36 entsprechende Kunststoffolie gebildet sein, die in die Aussparung 32 der Scheibe 18 geklebt wird.

Nachfolgend wird die Funktionsweise der Befestigung erläutert.

Zunächst wird die Klebstoffträgerfolie 36 mittels des Klebstoffes 38 auf die Befestigungsfläche 10 aufgeklebt. Die Scheibe 18 wird auf die Klebstoffträgerfolie 36 so aufgesetzt, daß die Profilwinkel 34 der Scheibe 18 (in Figur 4 rechts) neben den Profilwinkeln 40 auf der Klebstoffträgerfolie 36 aufsitzen. Dann wird die Scheibe 18 gegen die Klebstoffträgerfolie 36 (in Figur 4 nach links) verschoben, so daß sich die Profilwinkel 34 und 40 in der in Figur 4 gezeigten Weise verhaken. Anschließend wird eine Arretierungsschiene 44 in einen der Hohlräume zwischen der Klebstoffträgerfolie 36 und der Scheibe 18 geschoben. Die Arretierungsschiene 44 hat eine solche Breite, daß sie sich mit einer Längskante an einem Profilwinkel 34 der Scheibe 18 und mit der anderen Längskante an einem Profilwinkel 40 der Klebstoffträgerfolie 36 abstützt. Die Arretierungsschiene 44 verhindert dadurch, daß sich die Scheibe 18 wieder gegenüber der Klebstoffträgerfolie 36 verschieben kann und die Profilwinkel 34 und 40 außer Eingriff kommen können.

Die Scheibe 18 ist nun mittels der Klebstoffträgerfolie 36 fest an der Befestigungsfläche 12 festgelegt.

Nun wird die Platte 10 auf die Scheibe 18 gesetzt und mittels der Schraube 30 an der Scheibe 18 befestigt. Die Schraube 30 wird dabei so weit in die Scheibe 18 eingedreht, bis die Platte 10 mit ihrem Rand 16 fest auf der Befestigungsfläche 12 aufsitzt. Die pendelnde Verbindung der Platte 10 und der Scheibe 18 über das Kugelgelenk von Schraube 30 und Einsenkung 28 erleichtert das vollständige Aufsitzen der Platte 10 entlang ihres gesamten Umfangs. Die Erhöhung 22 auf der Oberseite der Scheibe 18 dient als Anschlag zwischen Scheibe 18 und Platte 10 und stellt sicher, daß beim Anziehen der Schraube 30 die Scheibe 18 nicht so weit in den Hohlraum 14 hineingezogen werden kann, daß hierdurch die Klebeverbindung 20 zwischen Scheibe 18 und Befestigungsfläche 12 belastet wird.

Wirkt auf die Platte 10 nun ein Kippmoment, so wird die Platte 10 mit der Seite ihres Randes 16, in welche das Kippmoment gerichtet ist, gegen die Befestigungsfläche 12 gedrückt. Das Kippmoment sucht nun die Platte 10 von der Befestigungsfläche 12 abzuheben, wobei die gegen die Befestigungsfläche 12 gedrückte Kante des Randes 16 als Kippkante wirkt. Das auf die Platte 10 wirkende Kippmoment übt über die Schraube 30 eine Zugkraft auf die Scheibe 18 aus. Da die Schraube 30 im Flächenschwerpunkt der Scheibe 18 angeordnet ist, wirkt diese Zugkraft als senkrecht zur Klebeverbindung 20 gerichtete Abhebekraft auf die Scheibe 18. Gegen eine solche senkrecht zur Ebene der Befestigungsfläche 12 gerichtete Abhebekraft weist die Klebeverbindung 20 ihre maximale Bindefestigkeit auf.

Soll die Platte 10 von der Befestigungsfläche 12 gelöst werden, so wird zunächst die Schraube 30 herausgedreht, so daß die Platte 10 von der Scheibe 18 abgenommen werden kann. Dann wird die Arretierungsschiene 44 herausgezogen. Nun kann die Scheibe 18 wieder gegen die Klebstoffträgerfolie 36 verschoben werden, so daß die Profilwinkel 34 und 40 außer Eingriff kommen und die Scheibe 18 weggenommen werden kann. Es haftet nun nur noch die Klebstoffträgerfolie 36 an der Befestigungsfläche 12. Die Klebstoffträgerfolie 36 kann nun wegen ihrer Flexibilität relativ leicht von der Befestigungsfläche 12 abgezogen werden. Das Abziehen der Klebstoffträgerfolie 36 wird dadurch erleichtert, daß diese wegen ihrer Flexibilität entlang einer wandernden Trennlinie abgeschält werden kann, wobei die Bindefestigkeit der Klebeverbindung 20 gegen ein Abschälen wesentlich schwächer ist als gegen ein ganzflächiges Abheben. Weiter wird das Abschälen der Klebstoffträgerfolie 36 durch die Sollbruchlinien 42 begünstigt, da die Klebstoffträgerfolie 36 beim Abziehen entlang dieser Sollbruchlinien 42 reißt und in schmalen Streifen abgezogen werden kann.

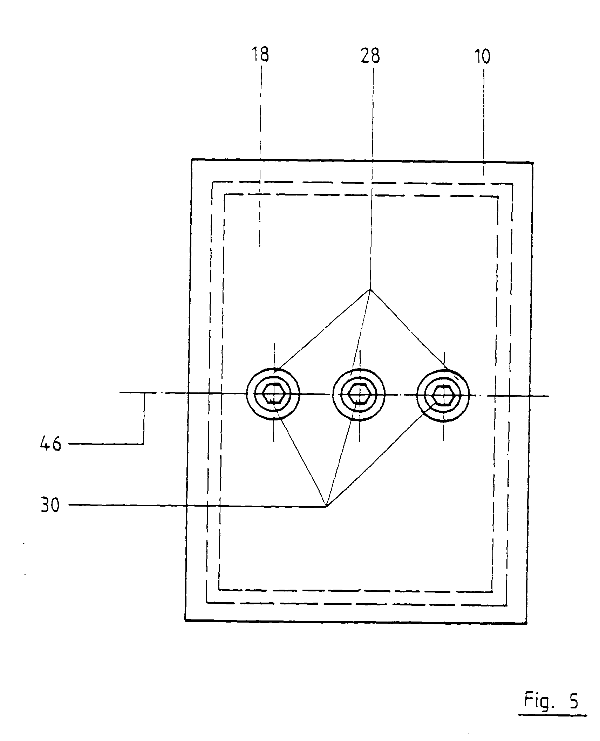

Figur 5 zeigt ein abgewandeltes Ausführungsbeispiel, bei welchem die Platte 10 an einer vertikalen Befestigungsfläche 12 angebracht ist und an der Platte 10 nur ein Kippmoment angreift, das durch das Gewicht eines an der Platte 10 angebrachten Gegenstandes verursacht wird.

In dieser Ausführungsform können mehrere Verbindungspunkte zwischen der Platte 10 und der Scheibe 18 vorgesehen sein, die auf der horizontalen Spiegelsymmetrieachse 46 der Scheibe 18 angeordnet sind.

Wirkt in dieser Ausführungsform das durch die Schwerkraft verursachte Kippmoment auf die Platte 10, so ergibt sich eine Kippbewegung um die untere horizontale Kante der Platte 10. Diese Kippbewegung verursacht eine Zugkraft, die entlang der Spiegelsymmetrieachse 46 auf die Scheibe 18 einwirkt. Da die Scheibe 18 zu dieser Spiegelsymmetrieachse 46 flächenzentriert ist, erzeugt auch diese Zugkraft nur eine Abhebekraft senkrecht zur Befestigungsfläche 12.

Diese Ausführungsform, die im übrigen mit der Ausführungsform der Figuren 1 bis 4 übereinstimmt, hat selbstverständlich die vorteilhafte hohe Bindefestigkeit nicht gegenüber Kippmomenten, die in Richtung der Spiegelsymmetrieachse 46 wirken.

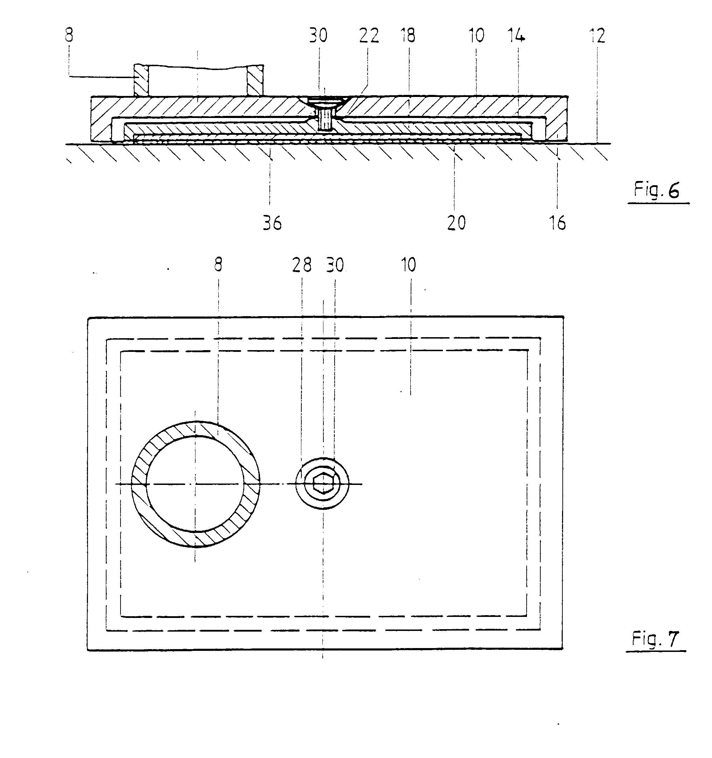

In den Figuren 6 und 7 ist dargestellt, wie die erfindungsgemäße Befestigung dazu verwendet wird, eine vertikale Stützsäule 8 für ein Stehpult, einen Bildschirmträger, eine Tischleuchte, einen Telefonarm oder dgl. nachrüstbar und wieder entfernbar auf einer horizontalen Möbelfläche zu befestigen. Die Stützsäule 8, die zum Beispiel als Metallrohr ausgebildet ist, weist an ihrem unteren Ende die starre Platte 10 auf, die in der oben beschriebenen Weise auf der die Befestigungsfläche 12 bildenden Möbelfläche befestigt wird.

## Patentansprüche

1. Befestigung einer starren Platte an einer Befestigungsfläche mittels einer flächigen Klebeverbindung, dadurch gekennzeichnet, daß zwischen der Platte (10) und der Befestigungsfläche (12) ein flächiger Hohlraum (14) gebildet ist, daß in diesem Hohlraum (14) eine Scheibe (18) angeordnet ist, die mittels der flächigen Klebeverbindung (20) an der Befestigungsfläche (12) befestigt ist, und daß die Scheibe (18) und die Platte (10) so miteinander verbunden sind, daß bei einer auf die Platte (10) einwirkenden Kippbelastung die Platte (10) sich mit ihrem die Scheibe (18) übergreifenden Rand (16) an der Befestigungsfläche (12) abstützt und die Kraft der Kippbelastung so in die Scheibe (18) eingeleitet wird, daß auf die Scheibe (18) nur eine zur Klebeverbindung (20) senkrechte Abhebekraft wirkt.

2. Befestigung nach Anspruch 1, dadurch gekennzeichnet, daß die Scheibe (18) in ihrem Flächenschwerpunkt mit der Platte (10) verbunden ist.

3. Befestigung nach Anspruch 1, dadurch gekennzeichnet, daß die Scheibe (18) mindestens eine Spiegelsymmetrieachse (46) aufweist und längs dieser Spiegelsymmetrieachse (46) mit der Platte (10) verbunden ist.

4. Befestigung nach einem der vorhergehenden Ansprüche, dadurch gekennzeichnet, daß die Platte (10) und die Scheibe (18) lösbar miteinander verbunden sind.

5. Befestigung nach einem der vorhergehenden Ansprüche, dadurch gekennzeichnet, daß die Scheibe (18) und die Platte (10) mittels eines Gewindes (30, 24) miteinander verbunden sind.

6. Befestigung nach einem der vorhergehenden Ansprüche, dadurch gekennzeichnet, daß die Verbindung der Scheibe (18) mit der Platte (10) eine pendelnde Bewegung zuläßt.

7. Befestigung nach Anspruch 5, dadurch gekennzeichnet, daß ein Anschlag (22) die Bewegung der Scheibe (18) in den Hohlraum (14) begrenzt.

8. Befestigung nach einem der vorhergehenden Ansprüche, dadurch gekennzeichnet, daß die Klebeverbindung (20) einen Klebstoff aufweist, der die Befestigungsfläche (12) nicht angreift und von der Befestigungsfläche (12) wieder lösbar ist.

9. Befestigung nach einem der vorhergehenden Ansprüche, dadurch gekennzeichnet, daß die Klebeverbindung (20) wenigstens eine flexible Klebstoffträgerfolie (36) aufweist, die mit einer klebfähigen Seite an der Befestigungsfläche (12) anliegt und mit der anderen nicht klebenden Seite trennbar an der starren Scheibe (18) fixierbar ist.

10. Befestigung nach Anspruch 9, dadurch gekennzeichnet, daß die Klebstoffträgerfolie (36) und die Scheibe (18) formschlüssig aneinander fixierbar sind.

11. Befestigung nach Anspruch 9, dadurch gekennzeichnet, daß die Klebstoffträgerfolie (36) und die Scheibe (18) mittels eines Klettverschlusses aneinander fixierbar sind.

12. Befestigung nach einem der vorhergehenden Ansprüche, dadurch gekennzeichnet, daß die Befestigungsfläche (12) die Oberfläche einer horizontalen Möbelplatte ist und daß die Platte (10) vertikale Stützmittel für Aufbauelemente trägt.

## Claims

1. Means of fastening a rigid plate to a fastening surface by means of a planar adhesive joint, characterized in that a planar cavity (14) is formed between the plate (10) and the fastening surface (12), in that there is disposed in said cavity (14) a layer (18) which is attached to the fastening surface (12) by means of the planar adhesive joint (20) and in that the layer (18) and the plate (10) are joined to one another in such a way that, in the event of a tilting load acting on the plate (10), the plate (10) bears on the fastening surface (12) by means of its rim (12) engaging over the layer (18) and the force of the tilting load is introduced into the layer (18) in such a way that only a lifting force perpendicular to the adhesive joint (20) acts on the layer (18).

2. Means of fastening according to Claim 1, characterized in that the layer (18) is joined to the plate (10) in its planar centre of gravity.

3. Means of fastening according to Claim 1, characterized in that the layer (18) has at least one axis (46) of specular symmetry and is joined to the plate (10) along said axis (46) of specular symmetry.

4. Means of fastening according to one of the preceding claims, characterized in that the plate (10) and the layer (18) are joined detachably to one another.

5. Means of fastening according to one of the preceding claims, characterized in that the layer (18) and the plate (10) are joined to one another by means of a thread (30, 24).

6. Means of fastening according to one of the preceding claims, characterized in that the joint of the layer (18) to the plate (10) permits a pendulating movement.

7. Means of fastening according to Claim 5, characterized in that a stop (22) limits the movement of the layer (18) in the cavity (14).

8. Means of fastening according to one of the preceding claims, characterized in that the adhesive joint (20) comprises an adhesive which does not attack the fastening surface (12) and can be detached again from the fastening surface (12).

9. Means of fastening according to one of the preceding claims, characterized in that the adhesive joint (20) comprises at least one flexible adhesive carrier film (36) which rests against the fastening surface (12) by means of a side which has adhesive properties and can be separably fixed to the rigid layer (18) by means of the other, nonadhesive side.

10. Means of fastening according to Claim 9, characterized in that the adhesive carrier film (36) and the layer (18) can be fixed to one another in a shape-locked manner.

11. Means of fastening according to Claim 9, characterized in that the adhesive carrier film (36) and the layer (18) can be fixed to one another by means of a Velcro fastener.

12. Means of fastening according to one of the preceding claims, characterized in that the fastening surface (12) is the surface of a horizontal furniture panel and that the plate (10) carries vertical supporting means for surface-mounted components.

## Revendications

1. Dispositif pour fixer une plaque rigide sur une embase de fixation par l'intermédiaire d'une liaison adhésive plate,
caractérisé en ce qu'
• il existe, entre la plaque (10) et l'embase de fixation (12) un volume creux plat (14) dans lequel est logé un disque (18) fixé à l'embase de fixation (12) par l'intermédiaire de la liaison adhésive plate (20),
• le disque (18) et la plaque (10) sont reliés entre eux de manière que la plaque (10), lorsqu'elle est soumise à l'action d'une charge de basculement, s'appuie par son bord (16) débordant le disque (18), sur l'embase de fixation (12) et que la force de basculement soit transmise au disque (18) de manière que celui-ci soit soumis seulement à l'action d'une force de soulèvement perpendiculaire à la liaison adhésive (20).

2. Dispositif de fixation selon la revendication 1,
caractérisé en ce que
le disque (18) est relié à la plaque (10) au centre de gravité de la surface du disque.

3. Dispositif de fixation selon la revendication 1,
caractérisé en ce que
le disque (18) comporte au moins un axe de symétrie '40), le long duquel il est relié à la plaque (10).

4. Dispositif de fixation selon une des revendications précédentes,
caractérisé en ce que
la plaque (10) et le disque (18) sont reliés entre eux de manière séparable.

5. Dispositif de fixation selon une des revendications précédentes,
caractérisé en ce que
le disque (18) et la plaque (10) sont reliés entre eux par un filetage (30).

6. Dispositif de fixation selon une des revendications précédentes,
caractérisé en ce que
la liaison du disque (18) et de la plaque (10) autorise un mouvement pendulaire.

7. Dispositif de fixation selon la revendication 5,
caractérisé en ce qu'
une butée (22) limite le mouvement du disque (18) à l'intérieur du volume creux (14).

8. Dispositif de fixation selon une des revendications précédentes,
caractérisé en ce que
la liaison adhésive (20) comporte un adhésif qui n'attaque pas la surface de fixation (12) et peut être détaché de celle-ci.

9. Dispositif de fixation selon une des revendications précédentes,
caractérisé en ce que
la liaison adhésive (20) comprend au moins une pellicule flexible (36) portant l'adhésif sur une face par laquelle cette pellicule repose sur l'embase de fixation (12) tandis que l'autre face non adhésive peut être fixée, de manière séparable, au disque rigide (18).

10. Dispositif de fixation selon la revendication 9,
caractérisé en ce que
la pellicule (36) portant l'adhésif et le disque (18) peuvent être fixés l'un sur l'autre par combinaison de formes.

11. Dispositif de fixation selon la revendication 9,
caractérisé en ce que
la pellicule (36) portant l'adhésif et le disque (18) peuvent être fixés l'un sur l'autre par une fermeture à crochets réciproques.

12. Dispositif de fixation selon une des revendications précédentes,
caractérisé en ce que
l'embase de fixation (12) est constituée par la surface d'un plateau horizontal d'un meuble et la plaque (10) porte un moyen d'appui vertical destiné à une superstructure.
